# EUROPEAN PATENT APPLICATION

(11) **EP 2 202 150 A2**
(43) Date of publication of application: **30.06.2010**
(21) Application number: 09252827.2
(22) Date of filing: 18.12.2009
(51) Int. Cl.: B64D 13/00, B64D 37/32

(54) **Temperature control system for an on board inert gas generation system**

(30) Priority: 18.12.2008 US 203081 P
(71) Applicant: Hamilton Sundstrand Corporation, Windsor Locks, CT 06096-1010 (US)
(72) Inventor: Surawski, Eric, Wethersfield Connecticut 06109 (US)
(74) Representative: Tomlinson, Kerry John

(57) **Abstract**

An apparatus (70,75) for providing air at a given temperature to an air separation module (215,315) has a first path (240,340) for delivering air having a first temperature to the air separation module, a second path (225,325) for delivering air having the first temperature to the air separation module, a heat exchanger (230,330) through which the second path flows, the heat exchanger modulating the temperature of the air from the first temperature to a second, lower, temperature, and a valve (245,345) for controlling an amount of air flowing through the second path whereby if the air delivered to the air separation module by the first path and the second path is below a temperature desired to run the air separation module essentially all of the air may flow through the first path.

## Description

### BACKGROUND

Aircraft may use an on board inert gas generating system ("OBIGGS") to minimize fuel tank accidents. Potentially dangerous fuel and air mixtures (such mixtures known as "ullage") in the air space in fuel tanks are diluted and minimized by reducing the oxygen content of ullage. The OBIGGS accomplishes this by adding nitrogen enriched air (NEA) to the ullage. The OBIGGS separates oxygen from ambient air and pumps relatively inert, oxygen impoverished NEA to the fuel tanks.

The OBBIGS may produce NEA by using permeable membranes in an air separation module ("ASM"). The ASM typically has a bundle of hollow, permeable fiber members packaged in a cylindrical shell with an inlet, an outlet at the ends of the shell and a side vent port. Pressurized air enters the ASM inlet and, as it passes through the hollow fibers, oxygen is separated from the air stream due to diffusion through the fiber walls. Oxygen exits through the side vent port and can be captured, but often the oxygen is considered a waste gas and is exhausted overboard.

The remaining air is deemed to be nitrogen enriched because, due to normal levels of gas in the air, if all the oxygen is removed from air, about 97% of the remaining air is nitrogen. Normal concentrations of oxygen in the NEA are usually above zero.

The remaining NEA flows out of the ASM via the outlet port and is distributed to the ullage space of the fuel tank or tanks for the purpose of inerting the fuel tanks and reducing a possibility of flammability. The ASM operates most efficiently, in terms of permeability of oxygen through the tubes at an elevated temperature, usually between 180° and 200°F (82-93°C).

Pressurized air used for NEA generation will usually originate from either an engine bleed or from another pressure source within the aircraft. With an engine bleed system, compressed hot air is usually cooled by a heat exchanger to an optimal temperature before being vented to an ASM.

### SUMMARY

According to a non-limiting embodiment of the invention, an apparatus for providing air at a given temperature to an air separation module has a first path for delivering air having a temperature to the air separation module, a second path for delivering air having a temperature to the air separation module, a heat exchanger through which the second path flows, the heat exchanger modulating the temperature of the air from the given temperature to a second temperature, and a valve for controlling an amount of air flowing through the second path whereby if the air delivered to the air separation module by the first path and the second path is below a temperature desired to run the air separation module essentially all of the air may flow through the first path.

According to another non-limiting embodiment shown herein, a method for providing air at a given temperature to an air separation module that operates at a desired temperature range and encounters cooler temperatures includes providing a first flow of air to an air separation module, selectively providing a second flow of air to a heat exchanger, and mixing the first flow of air with the second flow of air if mixing delivers the air at or within the desired temperature range.

### BRIEF DESCRIPTION OF THE DRAWINGS

These and other features of the present embodiment may be shown and best understood from the following specification and drawings.
Figure 1A is a first schematic, prior art depiction of an OBIGGS delivering air to an ASM.
Figure 1B is a second schematic, prior art depiction of an OBIGGS delivering air to an ASM.
Figure 2 is a schematic view of a non-limiting embodiment of an OBIGGS delivering air to an ASM.
Figure 3 is a schematic view of a non-limiting embodiment of an OBIGGS delivering air to an ASM.

### DETAILED DESCRIPTION

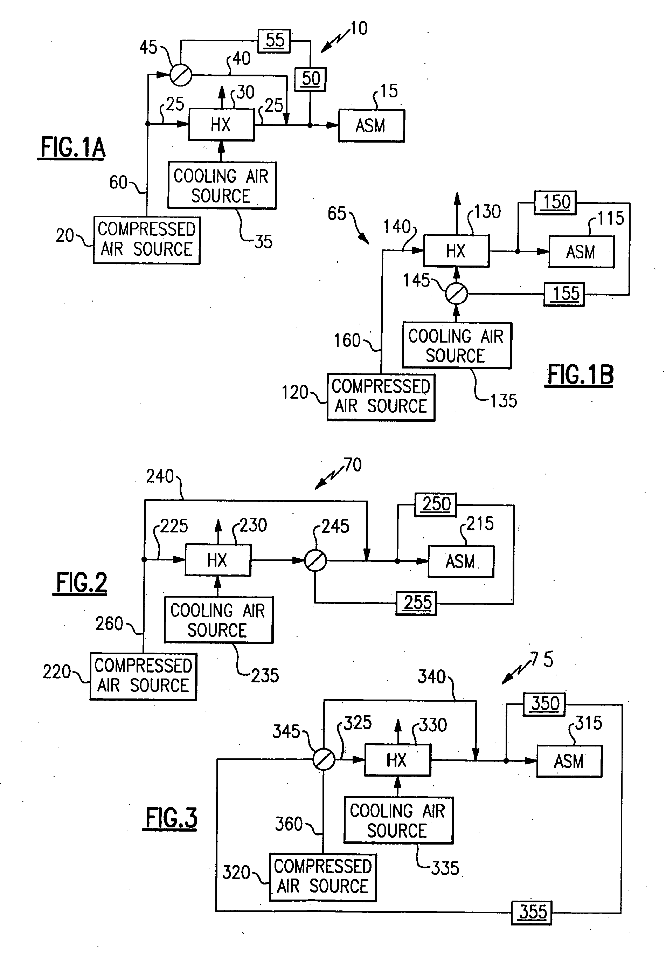

Referring now to Figure 1A, a prior art depiction of an OBIGGS 10 delivering compressed air to an ASM 15 is shown. A compressed air source 20, such as an aircraft engine (not shown), delivers compressed air to the ASM 15 through ducting 60 and two separate paths. The first path 25 delivers a first portion of the heated, compressed air, without any gating thereof, through a heat exchanger 30. The heat exchanger takes the heated compressed air and cools it with air from ambient or another cooled air source 35 within an aircraft (not shown). The second path 40 delivers a second portion of the heated, compressed air through a valve 45 to be mixed with air in the first path 25 downstream of the air provided through the heat exchanger 30.

Typically, an ASM 15 requires air at or about 180-200°F (82-93°C) to operate efficiently. Air from the compressed air source 20 is typically supplied at temperatures ranging from 300-500°F (150-260°C). A sensor 50 determines the temperature of the air entering the ASM and a controller 55 receives feedback from the sensor 50 and controls a position of the valve 45 so that a mixture of different temperature air from the first path 25 and the second path 40 is provided to the ASM at a proper temperature.

Referring now to Figure 1B, a second prior art system of an OBIGGS 65 delivering compressed air to an ASM 115 is shown. According to this system, all air intended for the ASM 115 is sent through a heat exchanger 130 that cools the air intended for ASM. This system modulates the temperature of the air intended for the ASM by controlling an amount of air provided to the heat exchanger 135 by valve 145. A sensor 150 determines the temperature of the air entering the ASM 115 and a controller 155 receives feedback from the sensor 150 and controls a position of the valve 145 ducting cooling air to the heat exchanger 130 so that the air intended for the ASM 115 is cooled to the proper temperature range to run the ASM 115 efficiently.

There are problems with the prior art systems shown in Figures 1A and 1B. There are large heat losses during cruise in the ducting 60, 160 and the paths 40, 140, 25, 125 between the compressed air source 20,120 and the heat exchanger 30, 130 and the ASM 15, 115. Temperatures at 30,000 feet (9100m), for instance may be -30°F (-34°C) or lower. Such low temperatures can cause great heat losses in the system. These heat losses can cause the maximum temperature of air delivered to the ASM to be below the optimal temperature range to run the ASM efficiently. Further complicating the issue of heat loss in the ducts, aircraft engines (not shown) require less power at altitude and engine bleed air temperature may at the lower end of the bleed air temperature range.

For instance, in Figure 1A, air passing through the heat exchanger 30 is not modulated so that the very cool air at altitude passing through the heat exchanger 30 and the cool air affecting the ducting 60 and paths 25, 45 may combine to lower the temperature below 180°F (82°C) even if the valve 45 allowing air at higher temperature to pass through the second path 40 is fully open. Compressed air in the first path 25 passing through the heat exchanger 30 may lower the temperature too much to allow the amount of higher temperature compressed air passing through the valve 45 in the second path 40 to raise the air temperature enough to heat the air between 180-200°F (82-93°C).

Similarly, in Figure 1B, the higher temperature compressed air always passes through the heat exchanger 130. Even though cooling air from cooling air source 135 passing through the heat exchanger 130 can be modulated, temperature losses in the ducting 160 and the paths 125, 140 and a radiator effect of the heat exchanger 135 may cause the temperature of the air delivered to the ASM to be below 180°F (82°C). This may be true even if the valve 145 allowing cooler air from the cooling air source 135 to pass through the heat exchanger is fully closed.

Referring to Figure 2, a non-limiting embodiment of an OBIGGS 70 delivering compressed air to an ASM 215 is shown. In this embodiment, a compressed air source 220 communicates compressed air having an elevated temperature via duct 260 and a first path 240 in which the compressed air passes directly to the ASM 215. The compressed air source also communicates compressed air having an elevated temperature via a second path 225 through a heat exchanger 230. The second path 225 through the heat exchanger is modulated by a valve 245 located downstream of the heat exchanger 230. A sensor 250 determines the temperature of the air entering the ASM 215 and a controller 255 receives feedback from the sensor and controls a position of the valve 245 so that a mixture of different temperature air from the first path and the second path is provided to the ASM at a proper temperature.

Referring still to Figure 2, if the valve 245 controlling cooling air flow through the heat exchanger 230 is shut, the higher temperature compressed air travels through the first path 240 to the ASM directly. In other words, contrary to the prior art, the output of the higher temperature compressed air may be delivered directly to the ASM without passing through a heat exchanger 230 first (see also Figures 1A and 1B) so that heat loss in the ducting 260, the second path 225 and the heat exchanger 230 does not drop the temperature of air entering the ASM 215 below the required temperatures. Cooling may not be necessary if heating losses in the compressed air passing through the heat exchanger 230 and the paths 225, 240 and ducting 260 are too great. A similar effect may be obtained if the valve 245 is positioned elsewhere controlling the flow through the heat exchanger 230, such as in line 225 upstream of the heat exchanger.

Referring to Figure 3, a further non-limiting embodiment of an OBIGGS 75 delivering compressed air to an ASM 315 is shown. In this embodiment, a compressed air source 320 communicates compressed air having an elevated temperature via duct 360 and a first path 340 in which the compressed air passes directly to the ASM 315. The compressed air source also communicates compressed air having an elevated temperature via a second path 325 through a heat exchanger 330. The ratio of air passing through the first path 340 and the second path 325 through the heat exchanger is modulated by a valve 345 that is located upstream of the heat exchanger 330. A sensor 350 determines the temperature of the air entering the ASM 315 and a controller 355 receives feedback from the sensor 350 and controls a position of the valve 345 so that a mixture of different temperature air from the first path and the second path is provided to the ASM at a proper temperature.

Referring still to Figure 3, if the valve 345 controlling cooling air flow through the heat exchanger 330 is shut, the higher temperature compressed air travels through the first path 340 to the ASM directly. In other words, contrary to the prior art, the output of the higher temperature compressed air may be delivered directly to the ASM without passing through a heat exchanger 330 first (see also Figures 1A and 1B) so that heat loss in the ducting 360, the second path 325 and the heat exchanger 330 does not drop the temperature of air entering the ASM 315 below the required temperatures. Cooling may not be necessary or desirable if heating losses in the compressed air passing through the heat exchanger 330 and the paths 325, 340 and ducting 360 are too great. A similar effect may be obtained if the valve 345 is positioned elsewhere controlling the ratio of the flows through the first path 340 and the second path 325, such as where the line 340 joins the flow from the heat exchanger 330.

The foregoing description is exemplary rather than defined by the limitations within. Various non-limiting embodiments are disclosed herein, however, one of ordinary skill in the art would recognize that various modifications and variations in light of the above teachings may fall within the scope of the appended claims. It is therefore to be understood that within the scope of the appended claims, the invention may be practised other than as specifically described. For that reason the appended claims should be studied to determine true scope and content.

## Claims

1. An apparatus (70,75) for providing air at a given temperature to an air separation module (215,315) comprising:
a first path (240,340) for delivering air having a first temperature to said air separation module,
a second path (225,325) for delivering air having the first temperature to said air separation module,
a heat exchanger (230,330) through which said second path flows, said heat exchanger modulating said temperature of said air from said first temperature to a second, lower, temperature, and
a valve (245,345) for controlling an amount of air flowing through said second path whereby if said air delivered to said air separation module by said first path and said second path is below a temperature desired to run said air separation module essentially all of said air may flow through said first path.

2. The apparatus of claim 1 wherein said first path (225,325) and said second path (240,340) join downstream of said heat exchanger.

3. The apparatus of claim 1 or 2 further comprising:
a compressed air source (220,320) for providing compressed air having the first temperature to said first and second paths.

4. The apparatus of claim 1, 2 or 3 wherein said valve (245,345) is located upstream of said heat exchanger.

5. The apparatus of claim 1, 2 or 3 wherein said valve (245,345) is located downstream of said heat exchanger.

6. The apparatus of any preceding claim wherein said valve (245) controls solely the flow through said second path (225).

7. The apparatus of any of claims 1 to 5 wherein said valve (345) controls the ratio of the flows through the first path (340) and second path (325).

8. A method for providing air at a given temperature to an air separation module that operates at or within a desired temperature range and encounters cooler temperatures, comprising:
providing a first flow of air to an air separation module,
selectively providing a second flow of air to a heat exchanger,
mixing said first flow of air with said second flow of air if said mixing delivers said air at or within said desired temperature range.

9. The method of claim 8 further comprising:
delivering said mixed flow of air to said air separation module.

10. The method of claim 8 or 9 further comprising:
not mixing said first flow of air with said second flow of air if said mixing does not deliver said air at or within said desired temperature range.

11. The method of claim 8, 9 or 10 wherein said selectively providing said second flow comprises valving the flow upstream of said heat exchanger.

12. The method of claim 8, 9 or 10 wherein said selectively providing said second flow comprises valving the flow downstream of said heat exchanger.
